# EUROPÄISCHE PATENTSCHRIFT

(11) **EP 4 440 862 B1**
(45) Veröffentlichungstag und Bekanntmachung des Hinweises auf die Patenterteilung: **22.04.2026**
(21) Anmeldenummer: 22814001.8
(22) Anmeldetag: 07.11.2022
(51) Int. Cl.: B60Q 1/00, B62D 1/04, G06F 3/0362, B60K 35/10, G06F 3/0487, G06F 3/0488

(54) **MULTIFUNKTIONALE BEDIENVORRICHTUNG FÜR EIN KRAFTFAHRZEUG UND KRAFTFAHRZEUG**
MULTIFUNCTIONAL OPERATING DEVICE FOR A MOTOR VEHICLE, AND MOTOR VEHICLE
DISPOSITIF DE COMMANDE MULTIFONCTIONNEL POUR UN VÉHICULE AUTOMOBILE ET VÉHICULE AUTOMOBILE

(30) Priorität: 03.12.2021 DE 102021213760
(43) Veröffentlichungstag der Anmeldung: 09.10.2024
(73) Patentinhaber: VOLKSWAGEN AKTIENGESELLSCHAFT, 38440 Wolfsburg (DE)
(72) Erfinder: HOFMANN, Martin, 38165 Lehre (DE); HUWER, Wojciech, 38110 Braunschweig (DE); THIELE, Henning, 38440 Wolfsburg (DE)
(86) Internationale Anmeldenummer: PCT/EP2022/080991
(87) Internationale Veröffentlichungsnummer: WO 2023/099126

(56) Entgegenhaltungen:
- EP-A2- 2 939 861
- DE-A1- 102020 201 248
- US-A1- 2003 023 353
- US-A1- 2004 118 664
- US-A1- 2017 153 718

## Beschreibung

Die vorliegende Erfindung betrifft eine multifunktionale Bedienvorrichtung für ein Kraftfahrzeug sowie ein mit einer solchen Bedienvorrichtung ausgestattetes Kraftfahrzeug.

Heutige Kraftfahrzeuge werden zunehmend komplexer und weisen oftmals eine Vielzahl von Funktionen und Einstellmöglichkeiten für einen Nutzer auf. Gleichzeitig bieten sich heutzutage vielfältige technische Möglichkeiten für unterschiedliche Ausgestaltungen von Bedienelementen, beispielsweise herkömmliche Tasten oder Knöpfe ebenso wie Touchscreens, also berührungsempfindliche Bildschirme und/oder dergleichen mehr. Durch eine manuelle Bedienung von Funktionen ebenso wie durch eine unübersichtliche Vielfalt von Funktionen und Bedienelementen kann ein Fahrer eines Kraftfahrzeugs allerdings abgelenkt werden. Zudem steht typischerweise nur ein begrenzter Bauraum für die Anordnung von Bedienelementen zur Verfügung. Somit ergibt sich die Herausforderung, eine Vielfalt unterschiedlicher Funktionen eines Kraftfahrzeugs für dessen Fahrer einfach und sicher bedienbar zu machen.

Beispielsweise beschreibt die DE 10 2020201 248 A1 Bedienvorrichtung zur kontextbasierten Steuerung von Funktionen in einem Fahrzeug. Die Bedienvorrichtung umfasst dort ein Kontextauswahlelement, mittels dessen einer von mindestens zwei Kontexten auszuwählen ist, mindestens zwei Funktionsauswahlelemente, mit denen jeweils eine zu steuernde Funktion auszuwählen ist, und ein Bedienfeld mit Bedienelementen zur Steuerung der ausgewählten zu steuernden Funktion. Die Bedienvorrichtung kann also als multifunktionale Bedienvorrichtung aufgefasst werden, wobei damit beispielsweise Im Kontext Medienwidergabe eine Lautstärke und im Kontext Ambiente eine Beleuchtung im Fahrzeuginneren eingestellt werden kann.

Die EP 2 939 861 A2 beschreibt ein Bediensystem für ein Fahrzeug mit einer ein Bedienmenü zur Steuerung und/oder Betätigung von Fahrzeugfunktionen anzeigenden Anzeigeeinrichtung und mit einem dreh- und drückbaren Dreh-Drück-Steller zum Bedienen des Bedienmenüs. Letzterem ist ein drehbares Direkt-Bedienelement zugeordnet, durch dessen Drehbetätigung mehrere unterschiedliche Hauptmenüpunkte des Bedienmenüs direkt auswählbar und/oder vorauswählbar sind. Mittels des Dreh-Drück-Stellers ist der vorausgewählte Hauptmenüpunkt und/oder wenigstens ein Untermenüpunkt im ausgewählten Hauptmenüpunkt auswählbar.

Die US 2003 / 0 023 353 A1 beschreibt eine Anordnung für ein mit Schaltern ausgestattetes Lenkrad in einem Fahrzeug. Dort sind zur Steuerung von Fahrzeugfunktionen und/oder optionalen Funktionen an gegenüberliegenden Seiten des Lenkrads zwei Multifunktionsschalter angebracht. Eine Anzeigevorrichtung auf dem Armaturenbrett des Fahrzeugs zeigt die verfügbaren Hauptfunktionen und deren optionale Nebenfunktionen an. Durch Betätigen eines ersten der Multifunktionsschalter kann eine Hauptfunktion und/oder eine Nebenfunktion ausgewählt werden. Ein zweiter der Multifunktionsschalter kann betätigt werden, um die Einleitung einer ausgewählten Steueroperation oder Funktionssteuerung und/oder einer zugehörigen untergeordneten Steueroperation zu bewirken.

Ein weiteres Beispiel für ein Bedienkonzept ist in der US 2004 / 0 118 664 A1 beschrieben. Dort ist ein Multifunktionsschalter zum Auswählen eines Systemmodus und zum selektiven Einstellen eines mit dem gewählten Systemmodus assoziierten Parameters vorgesehen. Der Schalter umfasst dabei einen Schalterkörper, von dem ein Teil um eine Achse rotierbar ist, um den Schalter in einer ersten Art und Weise zu betätigen. Der Schalterkörper ist weiter dazu eingerichtet, den Schalter in einer dazu unterschiedlichen zweiten Art und Weise zu betätigen. Weiter umfasst der Schalter einen Anzeigeteil zum Anzeigen von Systemmodusinformationen.

Als weiteres Beispiel beschreibt die US 2017 / 0 153 718 A1 ein Mensch-Maschine-Interfacesystem für ein Fahrzeug. Dieses System umfasst ein konfigurierbares Display zum selektiven Anzeigen einer ersten und einer zweiten Displaykonfiguration. Das System umfasst weiter einen Knopf, der entlang des Displays zwischen einer ersten und einer zweiten Position repositionierbar ist. Das System ist dazu eingerichtet, die erste Displaykonfiguration anzuzeigen, wenn der Knopf in der ersten Position ist und die zweite Displaykonfiguration anzuzeigen, wenn der Knopf in der zweiten Position ist. Damit soll ein verbessertes Steuersystem für ein Fahrzeug bereitgestellt werden, das eine Ablenkung eines Fahrers minimieren kann.

Als weiteres Beispiel beschreibt die US 2018 164 903 AA einen Bedienknopf zum Steuern eines Betriebs einer Maschine. Der Bedienknopf umfasst dort ein Befestigungselement zum Befestigen des Bedienknopfes auf einer Oberfläche der Maschine, ein Displayelement, einen Controller zum Steuern einer Anzeige eines Betriebsmodus der Maschine mittels des Displayelements und einen Betriebsmodusselektor zum Steuern einer Selektion eines Betriebsmodus der Maschine, wenn dieser Betriebsmodus mittels des Displayelements angezeigt wird.

Aufgabe der vorliegenden Erfindung ist es, eine vereinfachte und verbesserte Bedienbarkeit eines Kraftfahrzeugs zu ermöglichen.

Diese Aufgabe wird erfindungsgemäß durch die Gegenstände der unabhängigen Patentansprüche gelöst. Mögliche Ausgestaltungen und Weiterbildungen der vorliegenden Erfindung sind in den abhängigen Patentansprüchen, in der Beschreibung und in den Figuren offenbart.

Die erfindungsgemäße multifunktionale Bedienvorrichtung ist für ein Kraftfahrzeug vorgesehen, also ausgelegt. Die multifunktionale Bedienvorrichtung - im Folgenden auch kurz als Bedienvorrichtung bezeichnet - kann also bestimmungsgemäß in einem Kraftfahrzeug verbaut sein oder werden. Die Bedienvorrichtung weist ein multifunktionales Bedienelement - im Folgenden auch kurz als Bedienelement bezeichnet - zum Bedienen mehrerer unterschiedlicher vorgegebener Funktionen auf. Mittels des Bedienelements können also zumindest in bestimmungsgemäßer Einbaulage der Bedienvorrichtung in dem Kraftfahrzeug, mehrere vorgegebene Funktionen, insbesondere mehrere vorgegebene Funktionen des Kraftfahrzeugs, bedient, also beispielweise gesteuert, eingestellt oder aktiviert werden.

Das Bedienen einer Funktion im vorliegenden Sinne kann beispielsweise ein Aktivieren, Setzen oder Einstellen einer, insbesondere einer von mehreren für die jeweilige Funktion vorgegebenen, also an- oder auswählbaren, Option oder eines entsprechenden Wertes, die bzw. der der Funktion zugeordnet ist, bedeuten oder umfassen.

Die vorgegebenen, zumindest in bestimmungsgemäßer Einbaulage der Bedienvorrichtung mittels des Bedienelements bedienbaren Funktionen umfassen ein Einstellen einer Lautstärke für eine akustische Ausgabe mittels einer Lautsprechereinrichtung und ein Einstellen eines Fahrerlebnisses. Mittels des Bedienelements kann also beispielsweise eine Lautstärke oder Ausgabelautstärke einer Medienwiedergabe, eines Infotainmentdisplays, einer Sprachausgabe, etwa eines Navigationsgeräts, eines Sprachassistenten oder sprachgesteuerten Assistenten, eines Telefonats oder dergleichen, durch einen Nutzer, insbesondere einen Fahrer des Kraftfahrzeugs, bedient, also eingestellt oder verändert werden.

Zum Einstellen des Fahrerlebnisses sind mittels des Bedienelements zumindest in bestimmungsgemäßer Einbaulage der Bedienvorrichtung ein Fahrbetriebsmodus für das Kraftfahrzeug und ein Ambientemodus, also eine Atmosphäre, insbesondere eines Fahrzeuginnenraums oder Fahrzeuginsassenraums des jeweiligen Kraftfahrzeugs, durch einen Nutzer, insbesondere durch einen Fahrer des jeweiligen Kraftfahrzeugs, einstellbar.

In der vorliegenden Erfindung weist die Bedienvorrichtung wenigstens ein an dem Bedienelement angeordnetes Licht- oder Leuchtelement auf. Den unterschiedlichen vorgegebenen Funktionen ist jeweils eine Leucht- oder Lichtfarbe des Leuchtelements, also insbesondere ein bestimmter Farbton des von der Leuchteinrichtung ausgegebenen Lichts, zugeordnet. Die Bedienvorrichtung ist dann dazu eingerichtet, das Leuchtelement in Abhängigkeit von einer jeweils aktuell zur Bedienung an- oder ausgewählten Funktion zum Leuchten in der der jeweiligen Funktion zugeordneten Leucht- oder Lichtfarbe anzusteuern.

Die erfindungsgemäße multifunktionale Bedienvorrichtung ist also dazu eingerichtet, mittels eines einzigen Bedienelements sowohl die Lautstärke als auch den Fahrbetriebsmodus und den Ambientemodus einzustellen bzw. zu bedienen, also für einen Nutzer, insbesondere einen Fahrer des Kraftfahrzeugs, einstellbar bzw. bedienbar zu machen. Für die Funktion zum Einstellen der Lautstärke können mehrere einstellbare, also setzbare oder auswählbare, Optionen oder Werte vorgegeben sein, die unterschiedliche Lautstärkeeinstellungen oder beispielsweise auch eine Stummschaltung der akustischen Ausgabe mittels der Lautsprechereinrichtung umfassen. Die Lautsprechereinrichtung kann dabei insbesondere Teil des jeweiligen Kraftfahrzeugs, beispielweise Teil eines Infotainmentsystems des Kraftfahrzeugs sein. Für die Funktion zum Einstellen des Fahrerlebnisses können ebenso mehrere unterschiedliche einstellbare Optionen oder Werte vorgegeben sein, die unterschiedliche vorgegebene Fahrbetriebsmodi sowie unterschiedliche Ambientemodi sein oder umfassen können. Die Fahrbetriebsmodi können auch als Fahrprofile oder Fahrmodi bezeichnet werden. Als Fahrbetriebsmodi können beispielsweise ein Sportmodus, ein Standard- oder Komfortmodus, ein im Vergleich dazu energiesparenderer Ecomodus und/oder dergleichen mehr vorgegeben sein. Diese können jeweils eine vorgegebene oder vordefinierte Sammlung mehrerer Einstellungen oder Parameterwerte für mehrere Einrichtungen des Kraftfahrzeugs umfassen oder definieren, die ein Fahr- oder Ansprechverhalten des Kraftfahrzeugs vorgeben oder beeinflussen. Durch die Fahrmodi können also beispielsweise unterschiedliche abrufbare Maximalleistungen, ein Beschleunigungsverhalten, eine Fahrwerks- oder Dämpferabstimmung, eine Direktheit einer Lenkung oder Lenkeinrichtung des Kraftfahrzeugs und/oder dergleichen mehr eingestellt bzw. verändert werden.

Die Ambientemodi können ebenfalls jeweils eine oder mehrere Einstellungen oder Parameterwerte für eine oder mehrere Einrichtungen des Kraftfahrzeugs umfassen oder definieren. Dabei beeinflussen die Ambientemodus jedoch nicht ein Fahrverhalten des Kraftfahrzeugs, sondern beispielsweise letztlich optionale, also für einen sicheren Betrieb des Kraftfahrzeugs nicht notwendige, Atmosphären- bzw. Ambientefunktionen oder - einrichtungen des Kraftfahrzeugs. Diese können beispielsweise eine Ambiente-, Hintergrund-, Highlight- oder Bedienelementbeleuchtung, insbesondere in einem Insassenraum des Kraftfahrzeugs, eine Klimatisierung des Insassenraums, eine Medien- oder Musikauswahl und/oder dergleichen mehr umfassen oder einstellen. Die Atmosphären- oder Ambientemodi können mit anderen Worten also durch entsprechende Ansteuerung der Einrichtungen des Kraftfahrzeugs beispielsweise unterschiedliche Atmosphären, Stimmungen, Dekorationen oder Anmutungen in dem Insassenraum des Kraftfahrzeugs einstellen oder beeinflussen.

Das Leuchtelement der Bedienvorrichtung signalisiert stets durch seine Lichtfarbe, welche Funktion aktuell zur Bedienung ausgewählt, also durch Betätigung des Bedienelements direkt bedienbar ist. Dies kann dem Nutzer besonders einfach und ablenkungsarm, insbesondere bereits über ein peripheres Sehen, vermitteln, welche der Funktionen jeweils aktuell zur Bedienung ausgewählt ist. Damit kann also ein Abwenden des Blicks des Nutzers von einem umgebenden Verkehrsgeschehen zum Ermitteln der jeweils aktuell eingestellten Funktion vermieden oder reduziert werden. Zudem kann so eine besonders einfache und zuverlässige Bedienung der unterschiedlichen vorgegebenen Funktionen ermöglicht werden. Das Leuchtelement kann Teil des Bedienelements sein. Dabei kann das Leuchtelement beispielsweise an einem relativ zu einem Gehäuse der Bedienvorrichtung oder - in bestimmungsgemäßer Einbaulage der Bedienvorrichtung in dem Kraftfahrzeug - relativ zu einem Fahrzeuginterieur des Kraftfahrzeugs unbeweglichen, fixen Teil des Bedienelements, der also zum Bedienen der Funktionen nicht bewegt oder verstellt werden muss, angeordnet sein. Ebenso kann das Leuchtelement an einem beweglichen Teil des Bedienelements, das bzw. der also zum Bedienen wenigstens einer der Funktionen bewegt oder verstellt werden kann, angeordnet sein. In letzterem Fall kann das Leuchtelement also zum Bedienen der oder einer entsprechenden Funktion mit diesem Teil des Bedienelements relativ zu dem Gehäuse der Bedienvorrichtung oder relativ zu dem Fahrzeuginterieur des Kraftfahrzeugs mitbewegt werden. Ebenso kann das Leuchtelement beispielsweise eine von dem Bedienelement verschiedene Einrichtung der Bedienvorrichtung sein oder umfassen.

Ebenso können unterschiedlichen Optionen oder Werten einer oder mehrerer der vorgegebenen Funktionen beispielsweise unterschiedliche Farbsättigungen unter und/oder unterschiedliche Herrlichkeiten der jeweiligen Lichtfarbe, also des der jeweiligen Funktion zugeordneten Farbtons, zugeordnet sein. Diese Farbsättigungen und/oder Herrlichkeiten können dann durch die Bedienvorrichtung entsprechend der jeweils aktuell gesetzten oder ausgewählten Option bzw. gemäß den jeweils aktuell gesetzten oder ausgewählten Wert automatisch eingestellt werden. Dadurch kann dem Nutzer ein visuelles Feedback nicht nur zu der aktuell ausgewählten Funktion, sondern auch zu deren jeweils aktueller Einstellung oder deren jeweils aktuellen Wert oder Status vermittelt werden. Dies kann eine entsprechende Erkennbarkeit der jeweils aktuellen Einstellung sowie einer zum Bedienen der jeweiligen Funktion erfolgreichen Betätigung des Bedienelements verbessern und damit letztlich eine mit dem Betätigen des Bedienelements bzw. dem Bedienen der entsprechenden Funktion einhergehende Ablenkung verringern. Somit kann die Sicherheit weiter verbessert werden.

Die Bedienvorrichtung kann zum Bedienen der mehreren Funktionen eingerichtet sein, wenn diese in einer hierarchischen Struktur bzw. einer Struktur mit mehreren Menü- oder Bedienebenen organisiert sind. Auf einer jeden solchen Menü- oder Bedienebene können ein oder mehrere der Funktionen mittels des Bedienelements auswählbar und/oder Optionen oder Werte einer ausgewählten Funktion mittels des Bedienelements einstellbar sein. Ebenso kann die Bedienvorrichtung dazu eingerichtet sein, das mittels des Bedienelements zwischen den Menü- oder Bedienebenen, insbesondere zu einer in der vorgegebenen logischen oder hierarchischen Struktur jeweils benachbarten Bedienebene oder auch direkt zur obersten Bedienebene bzw. direkt zu einer vorgegebenen Standardebene, gewechselt werden kann.

Beispielsweise kann also mittels des Bedienelements von einer Bedienebene, auf oder in welcher die Funktion zum Einstellen der Lautstärke bedienbar ist, zu einer Bedienebene gewechselt werden, auf oder in der die Funktion zum Einstellen des Fahrerlebnisses bedienbar ist. Auf dieser Ebene können direkt, also ohne diese Bedienebene zu wechseln oder zu verlassen, die Funktionen zum Einstellen oder Auswählen des Fahrprofils und des Ambientemodus zugänglich bzw. bedienbar sein. Insbesondere kann dieser Bedienebene die Bedienebene zum Bedienen der Funktion zum Einstellen der Lautstärke direkt übergeordnet sein. Ebenso kann aber die Funktion zum Einstellen der Lautstärke beispielsweise ebenfalls auf derselben Bedienebene bedienbar sein, wie die Funktion oder Funktionen zum Einstellen des Fahrerlebnisses. Ebenso kann es möglich sein, dass beispielsweise die Funktion zum Einstellen des Fahrprofils und die Funktion zum Einstellen des Ambientemodus auf unterschiedlichen Bedienebenen bedienbar sind. Jedenfalls sind sämtliche dieser genannten Funktionen hier aber mittels desselben physischen Bedienelements bedienbar. Ebenso können mittels dieses Bedienelements weitere vorgegebene Funktionen bedienbar sein, wie etwa ein Einstellen einer Tönung eines elektrisch tönbaren Fensters des Kraftfahrzeugs. Solche weiteren Funktionen können gegebenenfalls mittels eines entsprechenden Software-Updates nachrüstbar oder freischaltbar sein.

Die hier genannten Funktionen zum Einstellen der Lautstärke und des Fahrerlebnisses, also des Fahrbetriebsmodus oder Fahrprofil und des Ambientemodus, hängen gemäß einer der vorliegenden Erfindung zugrunde liegenden Erkenntnis thematisch oder hinsichtlich ihrer Bedeutung, also logisch konzeptionell und/oder für viele Nutzer intuitiv zusammen. Die genannten Funktionen bzw. deren Bedienbarkeit mittels desselben Bedienelements, also die entsprechende Belegung des Bedienelements mit diesen Funktionen, ermöglichen eine besonders einfache und umfassende Anpassung des Nutzungserlebnisses für einen Nutzer bei der Nutzung bzw. im Betrieb des Kraftfahrzeugs. Dies ist dabei gleichzeitig besonders übersichtlich möglich, da die Lautstärke unabhängig vom Fahrerlebnis einstellbar ist. Im Gegensatz zu bisherigen Lösungen bzw. Bedienkonzepten muss der Nutzer hier also zum gleichermaßen umfänglichen oder vollständigen Anpassen des Nutzungserlebnisses beispielsweise nicht unterschiedliche Bedienelemente oder Bedieneinrichtungen oder unterschiedliche Tasten oder Knöpfe einer Bedieneinrichtung verwenden. Zudem kann durch die beschriebenen Ausgestaltungen der vorliegenden Erfindung eine besonders schnelle Bedienung oder Einstellung sowohl der Lautstärke als auch des Fahrerlebnisses ermöglicht werden, da dazu beispielsweise nicht durch komplett separate logische oder hierarchische Menü- oder Bedienebenen oder -strukturen navigiert werden muss oder unterschiedliche Bedienelemente oder Bedienvorrichtungen verwendet werden müssen. Vielmehr können die Funktionen zum Einstellen der Lautstärke und zum Einstellen des Fahrerlebnisses innerhalb derselben derartigen Struktur angeordnet bzw. zugänglich sein.

Insgesamt ermöglicht es die vorliegende Erfindung somit, die unterschiedlichen genannten Einstellungen besonders schnell und mit besonders wenig Ablenkungspotenzial und damit auch besonders sicher vorzunehmen. Dabei sind die genannten Funktionen bzw. Einstellungen besonders personen- und situationsabhängig bzw. -individuell, sodass für diese Einstellungen oder Funktionen eine relativ hohe Wahrscheinlichkeit eines relativ häufigen Wechsels einer jeweiligen Einstellung durch einen Nutzer oder durch verschiedene Nutzer des Kraftfahrzeugs im Vergleich zu anderen Funktionen oder Einstellungen des Kraftfahrzeugs besteht. Beispielsweise kann es typischerweise für eine Funktion, wie etwa das Einstellen einer Nachleuchtdauer einer Hilfsbeleuchtung nach Ausführen einer damit verknüpften Bedienhandlung, wie etwa einem Schließen einer Tür oder Klappe des Kraftfahrzeugs, oder dergleichen, weniger stark ausgeprägte personenindividuelle Vorlieben geben und eine solch von Funktion oder Einstellung kann zudem weniger stark situationsabhängig sein. Für eine solche Einstellung wird also beispielsweise eine bestimmte vorgegebene Standardeinstellung von vielen Nutzern eher akzeptiert und beibehalten oder typischerweise von einem bestimmten Nutzer nur einmalig gemäß einer individuellen Vorliebe vorgenommen und dann situationsunabhängig dauerhaft beibehalten werden. Für eine solche Funktion kann also ein höherer Bedienaufwand ohne individuell bzw. exklusiv zugeordnetes physisches Bedienelement und ohne Verknüpfung der Bedienung mit anderen Funktionen gerechtfertigt sein. Durch eine solche Einteilung oder Kategorisierung der Funktionen des Kraftfahrzeugs und insbesondere die erfindungsgemäß vorgeschlagene Kombination oder Zuordnung der genannten Funktionen in oder zu dem gemeinsamen Bedienelement kann also ein Kompromiss zwischen einerseits einer theoretisch besonders schnellen Bedienbarkeit bzw. Erreichbarkeit oder Auswählbarkeit sämtlicher Funktionen durch individuelle physische Bedienelemente und andererseits einer praktikablen Begrenzung der Anzahl von physischen Bedienelement bei besonders hohem effektivem Nutzungskomfort erreicht werden.

Die erfindungsgemäße Bedienvorrichtung kann wenigstens einen Aktuator zum Erzeugen wenigstens einer haptischen Rückmeldung umfassen. Beispielsweise kann die Bedienvorrichtung dazu eingerichtet sein, auf ein oder mehrere vorgegebene oder vordefinierte Auslöseereignisse hin automatisch eine jeweilige haptische Rückmeldung, wie etwa eine Vibration, an dem Bedienelement zu erzeugen. Dabei können für unterschiedliche Auslöseereignisse unterschiedliche haptische Rückmeldungen, wie etwa unterschiedliche Vibrationsmuster oder -dauern oder dergleichen, vorgegeben sein, also erzeugt werden. Als Auslöseereignisse können beispielsweise eine, insbesondere hinsichtlich einer vorgegebenen Funktionsauslösung erfolgreiche, Betätigung des Bedienelements, also etwa ein erfolgreiches Wechsel, Auswählen oder Einstellen einer Menü- oder Bedienebene, einer Funktion und/oder einer Option oder eines Wertes einer Funktion, vorgegeben oder definiert sein. Durch solche haptischen Rückmeldungen kann einem Nutzer eine besonders zuverlässige Blindbedienung der mit dem Bedienelement bzw. der Bedienvorrichtung verknüpften bzw. bedienbaren Funktionen ermöglicht werden. Dies kann zu einer verbesserten Sicherheit beitragen, da beispielsweise der Nutzer im Rahmen einer Bedienung der Funktionen bzw. einer Betätigung des Bedienelements oder der Bedienvorrichtung zumindest weniger häufig seinen Blick von einer Umgebung, etwa von einem umgebenden Verkehrsgeschehen, abwenden muss.

In einer möglichen Ausgestaltung der vorliegenden Erfindung ist die Bedienvorrichtung dazu eingerichtet, jeweils nach Ablauf einer vorgegebenen Zeitspanne ab oder nach der jeweils letzten Bedienung einer von dem Einstellen der Lautstärke unterschiedlichen Funktion, insbesondere mittels des Bedienelements, in einen vorgegebenen Standardbetriebsmodus zurückzukehren, sofern innerhalb der jeweiligen Zeitspanne, insbesondere mittels der Bedienvorrichtung oder beispielsweise eines damit gekoppelten Infotainmentdisplays oder Infotainmentsystems, keine weitere Bedienung des Bedienelements oder einer von dem Einstellen der Lautstärke unterschiedlichen Funktion erfolgt. In diesem Standardbetriebsmodus ist die Lautstärke direkt einstellbar. Mit anderen Worten ist in dem Standardbetriebsmodus also die Lautstärke durch eine einzige Betätigung des Bedienelements unmittelbar veränderbar, also beispielsweise ohne zunächst die Funktion zum Einstellen der Lautstärke an- oder auszuwählen oder zunächst von der jeweils zuletzt verwendeten Hierarchie-, Menü- oder Bedienebene zu der Ebene, auf der die Funktion zum Einstellen der Lautstärke angesiedelt ist, zu wechseln. Insbesondere wird also stets nach einer Bedienung der Einstellung des Fahrerlebnisses oder auch nach einem Navigieren in eine Bedienebene, in der zumindest ein Aspekt des Fahrerlebnisses bzw. eine von der Einstellung der Lautstärke verschiedene Funktionen bedienbar bzw. ausgewählt ist, nach ununterbrochenem Ablauf der vorgegebenen Zeitspanne jeweils automatisch die Funktion zum Einstellen der Lautstärke an- oder ausgewählt. Damit kann der Nutzungskomfort auf zweierlei Weisen weiter verbessert werden. Zum einen wird erfahrungsgemäß die Lautstärke häufiger verändert als das Fahrerlebnis, was in der hier vorgeschlagenen Ausgestaltung der vorliegenden Erfindung für den jeweiligen Nutzer besonders einfach und schnell möglich ist. Zum anderen kann der jeweilige Nutzer nach Ablauf der vorgegebenen Zeitspanne jeweils von demselben Ausgangspunkt in der vorgegebenen Menü- oder Bedienebenenstruktur ausgehen. Somit wird also der Aufwand eingespart, zunächst feststellen zu müssen, welcher Punkt oder welche Stelle dieser Struktur momentan ausgewählt ist, um eine bestimmte Funktion an- oder auszuwählen bzw. zu erreichen. Somit kann dem Nutzer eine Blindbedienung des Bedienelements bzw. der damit verknüpften, also bedienbaren Funktionen ermöglicht oder erleichtert werden. Dies kann einen Ablenkungspotenzial bei der Betätigung des Bedienelements reduzieren und somit die Sicherheit weiter verbessern. Die vorgegebene Zeitspanne kann beispielsweise mehrere Sekunden betragen, also etwa im Bereich zwischen 3 Sekunden und 10 Sekunden liegen. Ebenso können andere Werte für die Zeitspanne vorgegeben oder einstellbar sein.

In einer weiteren möglichen Ausgestaltung der vorliegenden Erfindung ist das Bedienelement auf mehrere unterschiedlichen Arten und Weisen betätigbar. Die Bedienvorrichtung ist dann dazu eingerichtet, auf eine Betätigung des Bedienelements in einer ersten Art hin zwischen wenigstens zwei vorgegebenen Funktionen bzw. Menü- oder Bedienebenen oder die jeweils ausgewählte bzw. direkt bedienbare Funktion zu wechseln. Die Bedienvorrichtung ist weiter dazu eingerichtet, auf eine Betätigung des Bedienelements in einer zweiten Art hin zwischen unterschiedlichen vorgegebenen Optionen oder Werten der jeweils aktuell an- oder ausgewählten Funktion zu wechseln. Die erste Art der Betätigung kann beispielsweise ein Drücken zumindest eines Teils des Bedienelements entlang einer Bedienachse sein oder umfassen. Die zweite Art der Betätigung des Bedienelements kann beispielsweise ein Drehen desselben und/oder eines anderen Teils des Bedienelements um diese Bedienachse sein oder umfassen. Ebenso kann die erste und/oder die zweite Art der Betätigung des Bedienelements anderweitig ausgestaltet sein, beispielsweise ein Verschieben, ein Berühren, eine Wischbetätigung oder Wischgeste auf einem berührungsempfindlichen Oberflächenteil und/oder dergleichen mehr sein oder umfassen. Ebenso können weitere Arten der Betätigung des Bedienelements vorgesehen bzw. möglich sein. Durch die hier vorgeschlagene Ausgestaltung der vorliegenden Erfindung kann eine Bedienung der mehreren vorgegebenen Funktionen sowie gegebenenfalls ein Navigieren entlang einer vorgegebenen Struktur von Menü- oder Bedienebenen oder dergleichen allein mittels des einen Bedienelements auf besonders einfache und intuitive Weise realisiert werden. Dadurch kann letztlich eine besonders aufmerksamkeits- bzw. ablenkungsarme Betätigung des Bedienelements bzw. eine entsprechende besonders sichere Bedienung der mehreren Funktionen mittels des Bedienelements erreicht werden.

In einer weiteren möglichen Ausgestaltung der vorliegenden Erfindung sind die vorgegebenen, also mittels des Bedienelements bedienbaren Funktionen in mehreren Bedienebenen, auf oder in denen jeweils wenigstens eine der Funktionen bedienbar ist, strukturiert oder organisiert. Das Bedienelement ist hier als Dreh-Drücksteller ausgestaltet.

Die Bedienvorrichtung ist dann dazu eingerichtet, auf eine Drückbetätigung des Bedienelements entlang einer vorgegebenen Achse bzw. Bedienachse hin zwischen den Bedienebenen zu wechseln. Weiter ist die Bedienvorrichtung dazu eingerichtet, auf eine Wischbetätigung, also ein wischendes Berühren eines berührungsempfindlichen Bereichs des Bedienelements, und/oder auf ein Berühren eines berührungsempfindlichen Bereichs des Bedienelements hin jeweils soweit vorhanden zwischen mehreren Funktionen derselben jeweils aktuell ausgewählten Bedienebene zu wechseln. Weiter ist die Bedienvorrichtung dazu eingerichtet, auf eine Drehbetätigung des Bedienelements hin durch vorgegebene Optionen oder Werte der jeweils aktuell ausgewählten Funktion zu wechseln oder zu schalten. Die hier vorgeschlagene Ausgestaltung der vorliegenden Erfindung ermöglicht eine besonders intuitive und komfortable Nutzung der Bedienvorrichtung zum Bedienen der mehreren vorgegebenen Funktionen. Durch die unterschiedlichen funktionellen Zuordnungen der hier beschriebenen unterschiedlichen Betätigungsarten des Bedienelements kann zudem eine Gefahr für eine Fehlbetätigung oder beispielsweise eine unbeabsichtigte Doppelbetätigung des Bedienelements reduziert werden. Auch dies kann zu einer verbesserten Sicherheit und einem verbesserten Bedien- oder Nutzungskomfort beitragen. Sind nur zwei Bedienebenen vorgegeben oder definiert, so kann durch wiederholte Druckbetätigung, also durch wiederholte Drückbetätigungen des Bedienelements zwischen diesen beiden Bedienebenen hin und her gewechselt werden. Sind mehr als zwei Bedienebenen vorgegeben oder definiert, so können diese durch wiederholte Drückbetätigungen des Bedienelements beispielsweise auf- und absteigend oder zyklisch durchgewechselt werden.

In einer weiteren möglichen Ausgestaltung der vorliegenden Erfindung ist es vorgesehen, dass die Bedienvorrichtung ein von dem Bedienelement räumlich beabstandetes Infotainmentdisplay für das Kraftfahrzeug umfasst oder in bestimmungsgemäßer Einbaulage in dem Kraftfahrzeug mit einem solchen Infotainmentdisplay des Kraftfahrzeugs verbunden ist. Ein solches Infotainmentdisplay kann beispielsweise ein, insbesondere berührungsempfindlicher, Bildschirm sein, der auch für weitere Funktionen oder Funktionalitäten, die nicht mittels des Bedienelements bedienbar sind, verwendet werden kann. Ein solches Infotainmentdisplay kann beispielsweise eine Bildschirmdiagonale von mehreren Zoll, beispielsweise 4 Zoll bis 16 Zoll oder mehr, aufweisen. Insbesondere kann das Infotainmentdisplay größer als das Bedienelement sein. In der hier vorgeschlagenen Ausgestaltung der vorliegenden Erfindung ist die Bedienvorrichtung dazu eingerichtet, korrespondierend zu jeder Betätigung des Bedienelements ein Steuersignal zu erzeugen und an das Infotainmentdisplay zu senden. Dies kann beispielsweise über eine direkte Verbindung oder in bestimmungsgemäßer Einbaulage über ein Bordnetz des Kraftfahrzeugs erfolgen. Durch das Steuersignal wird das Infotainmentdisplay jeweilige zum Visualisieren einer durch die jeweilige Betätigung des Bedienelements bewirkten Auswahl oder Einstellung angesteuert. Mit anderen Worten kann also ein Effekt einer vorgenommenen Betätigung des Bedienelements mittels des Infotainmentdisplay visuell repräsentiert oder ausgegeben werden. Da das Infotainmentdisplay typischerweise derart angeordnet ist, dass der Fahrer des Kraftfahrzeugs darauf dargestellte Inhalte besonders schnell, beispielsweise aus dem Augenwinkel, ohne seinen Blick von dem umgebenden Verkehrsgeschehen vollständig abzuwenden oder durch minimale Augenbewegung, erfassen kann, kann somit eine besonders sichere und zuverlässige Betätigung des Bedienelements auch beispielsweise für solche Fahrer oder Nutzer ermöglicht werden, die mit der für das Bedienelement vorgegebenen Struktur von Funktionen oder Bedienebenen nicht vertraut sind. Insbesondere kann so eine Blindbetätigung des Bedienelements bei gleichzeitig zielsicherer Bedienung der damit verknüpften, also bedienbaren Funktionen ermöglicht werden. Zudem kann so auf besonders effektive und effiziente Weise eine visuelle Rückmeldung an den jeweiligen Nutzer realisiert werden, da beispielsweise das Bedienelement entsprechend kleiner ausgestaltet und/oder eine Anzeigeeinrichtung an dem Bedienelement selbst eingespart werden könnte.

In einer möglichen Weiterbildung der vorliegenden Erfindung ist das Infotainmentdisplay als Touchscreen, also als berührungsempfindlicher Bildschirm, ausgestaltet. Die Bedienvorrichtung ist dann dazu eingerichtet, auf eine Betätigung des Bedienelements hin das Infotainmentdisplay zum gleichzeitigen Anzeigen von Bediensymbolen für - sofern vorhanden - mehr als drei, insbesondere alle, vordefinierten, also jeweils verfügbaren Funktionen auf einer durch die Betätigung ausgewählten Menü- oder Bedienebene und/oder zum Anzeigen von Bediensymbolen für - sofern vorhanden - mehr als drei, insbesondere alle, vordefinierten, also verfügbaren Optionen oder Werte der jeweils aktuell ausgewählten Funktion anzusteuern. Mit anderen Worten wird das Infotainmentdisplay hier automatisch derart angesteuert, dass die mehreren Funktionen bzw. die mehreren Optionen oder Werte durch Berühren des jeweiligen Bediensymbols direkt auswählbar, einstellbar oder aktivierbar bzw. setzbar sind. Es muss dann also beispielsweise nicht mittels des Bedienelements durch mehrere Funktionen bzw. Optionen oder Werte durch gewechselt werden, um eine bestimmte Funktion auszuwählen bzw. eine bestimmte Option oder einen bestimmten Wert zu setzen. Dies kann insbesondere bei mehreren oder weiteren mit dem Bedienelement verknüpften Funktionen und/oder einer Vielzahl von für eine oder mehrere der Funktionen vorgegebenen Optionen oder Werten eine besonders schnelle und einfache Bedienung ermöglichen. Somit kann also eine insgesamt für ein Bedienen der Funktionen benötigte Zeit reduziert werden. Ebenso kann so gegebenenfalls eine Zeit, für die eine Hand eines jeweiligen Nutzers bei einer bestimmten Bedienung einer Funktion im Bereich des Bedienelements - und damit insbesondere weiter von einem Lenkrad des Kraftfahrzeugs entfernt als das Infotainmentdisplay - verbleibt oder verharren muss, reduziert werden. Dadurch kann die Sicherheit bei der Nutzung der Bedienvorrichtung im Betrieb des Kraftfahrzeugs weiter verbessert werden. Zudem kann so ein verbesserter Nutzungskomfort erreicht werden, da dem jeweiligen Nutzer mittels des Infotainmentdisplays mehrere oder alle jeweils verfügbaren Optionen oder Werte, insbesondere auch eine jeweils aktive oder gesetzte Option oder ein jeweils aktiver oder gesetzter Wert, besonders einfach verständlich vermittelt werden können.

In einer weiteren möglichen Ausgestaltung der vorliegenden Erfindung weist das Bedienelement einen, insbesondere integrierten, also als Teil des Bedienelements ausgestalteten oder angeordneten, Anzeigebereich auf. Die Bedienvorrichtung ist dann dazu eingerichtet, den Anzeigebereich zum Visualisieren einer jeweils aktuell zur Bedienung ausgewählten, also unmittelbar oder direkt mittels des Bedienelements bedienbaren, Funktion und/oder einer jeweils aktuellen Auswahl oder Einstellung einer Option oder eines Wertes der aktuell zur Bedienung ausgewählten Funktion anzusteuern. Dabei kann die jeweils aktuell direkt bedienbare Funktion und/oder eine jeweils aktuell vorausgewählte Funktion, die also gegebenenfalls zwar vorausgewählt aber noch nicht zur direkten Bedienung bestätigt oder tatsächlich ausgewählt oder aktiviert ist, visualisiert werden. Ebenso kann die jeweils aktuell gesetzte, also aktivierte Optionen oder der aktuell gesetzte, also aktivierte Wert der Funktion oder eine jeweilige entsprechende Vorauswahl unabhängig von oder noch vor deren Setzen, also Aktivieren visualisiert werden. Die hier vorgeschlagene Ausgestaltung der vorliegenden Erfindung ermöglicht also eine visuelle Rückmeldung für Betätigungen des Bedienelements unmittelbar an oder im Bereich des Bedienelements bzw. der Bedienvorrichtung. Damit ist eine besonders einfache und intuitive Erfassung und ein besonders einfaches und intuitives Verständnis der visuellen Rückmeldung sowie eines jeweils aktuellen Zustands des Bedienelements oder der Bedienvorrichtung bzw. der damit bedienbaren Funktionen möglich. Durch die hier vorgeschlagene Ausgestaltung der vorliegenden Erfindung kann die visuelle Rückmeldung stets, also dauerhaft verfügbar sein, beispielsweise auch dann, wenn zwar wie an anderer Stelle beschrieben ein Infotainmentdisplay vorgesehen ist, auf diesem aber andere Inhalte dargestellt werden. Somit kann also durch die hier vorgeschlagene Ausgestaltung der vorliegenden Erfindung eine besonders sichere und zuverlässige Nutzung der Bedienvorrichtung und der damit verknüpften Funktionen ermöglicht werden.

In einer möglichen Weiterbildung der vorliegenden Erfindung ist die Bedienvorrichtung dazu eingerichtet, mittels des Anzeigebereichs die jeweilige Funktion und/oder die jeweils aktuelle Auswahl der Option eines Wertes der Funktion gleichzeitig symbolhaft und worthaft zu visualisieren. Eine symbolhaft Visualisierung kann beispielsweise durch ein jeweiliges vorgegebenes Symbol realisiert werden. Eine worthaft Visualisierung kann beispielsweise durch eine Ausgabe oder Darstellung von einem oder mehreren Worten, Akronymen, Abkürzungen oder Buchstaben realisiert werden. Dies kann, insbesondere einem mit der Bedienvorrichtung noch nicht vertrauten Nutzer, eine besonders einfache und zuverlässige genaue, also wunschgemäße Nutzung der Bedienvorrichtung ermöglichen. Gleichzeitig kann damit eine besonders einfache, schnelle und ablenkungsarme Nutzung der Bedienvorrichtung ermöglicht werden, da eine symbolhafte Visualisierung typischerweise schneller und mit weniger Aufmerksamkeit und/oder zuverlässig bereits mittels peripheren Sehens erfassbar sein kann.

Ein weiterer Aspekt der vorliegenden Erfindung ist ein Kraftfahrzeug, das eine erfindungsgemäße Bedienvorrichtung aufweist. Das erfindungsgemäße Kraftfahrzeug kann insbesondere das im Zusammenhang mit der erfindungsgemäßen Bedienvorrichtung genannte Kraftfahrzeug sein oder diesem entsprechen. Dementsprechend kann das erfindungsgemäße Kraftfahrzeug einige oder alle der im Zusammenhang mit der erfindungsgemäßen Bedienvorrichtung genannten Eigenschaften, Ausgestaltungen und/oder Merkmale aufweisen.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren allein gezeigten Merkmale und Merkmalskombinationen sind nicht nur in der jeweils angegebenen Kombination, sondern auch in anderen Kombinationen oder in Alleinstellung verwendbar, sofern sie unter den Wortlaut der Ansprüche fallen.

Die Zeichnung zeigt in:
- Fig. 1: eine schematische Darstellung zur Veranschaulichung eines Bedienkonzepts für ein Kraftfahrzeug; und
- Fig. 2: eine schematische teilweise Darstellung eines Kraftfahrzeugs (25) mit einer entsprechenden Bedienvorrichtung.

Gleiche oder funktionsgleiche Elemente sind in den Figuren mit den gleichen Bezugszeichen versehen.

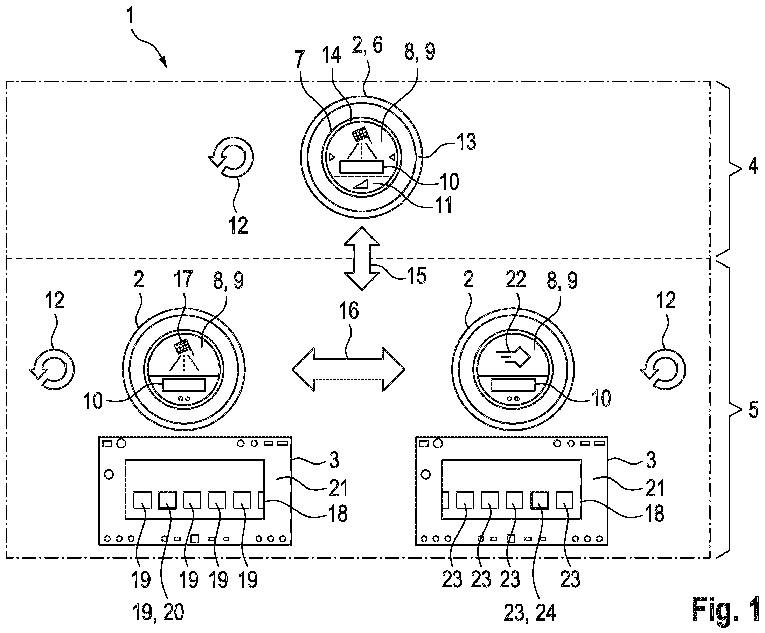

Fig. 1 zeigt eine schematische Übersichtsdarstellung zur Veranschaulichung eines Bedienschemas 1 einer Bedienvorrichtung für ein Fahrzeug. Die Bedienvorrichtung umfasst hier ein Bedienelement 2, das insbesondere als Dreh-Drücksteller ausgestaltet sein kann. Weiter umfasst das Fahrzeug oder die Bedienvorrichtung ein mit dem Bedienelement 2 gekoppeltes Infotainmentdisplay 3. Beispielhaft sind hier verschiedene mögliche Zustände des Bedienelements 2 und des Infotainmentdisplays 3 dargestellt, die die durch entsprechende Betätigungen des Bedienelements 2 erreicht oder eingestellt werden können. Diese Betätigungen sind hier durch entsprechende Pfeile repräsentiert.

Das Bedienschema 1 umfasst beispielhaft zwei logische oder hierarchische Menü- oder Bedienebenen, die hier als erste Bedienebene 4 und als zweite Bedienebene 5 repräsentiert sind. Der ersten Bedienebene 4 ist als Funktion eine Einstellung einer Lautstärke einer akustischen Ausgabe in dem jeweiligen Fahrzeug zugeordnet oder zugewiesen. Der zweiten Bedienebene 5 ist eine Einstellung eines Fahrerlebnisses zugewiesen. Dabei sind auf der zweiten Bedienebene 5 organisatorisch oder logisch mehrere Funktionen angeordnet. Diese umfassen vorliegend eine Funktion für eine Fahrprofil-, also Fahrbetriebsmoduseinstellung und eine Funktion für eine Ambientemoduseinstellung des jeweiligen Fahrzeugs.

Das Bedienelement 2 umfasst hier einen äußeren Fixbereich, der unbeweglich ist, in bestimmungsgemäßer Einbaulage in dem jeweiligen Fahrzeug also auch bei einer Betätigung des Bedienelements 2 beispielsweise orts- oder lagefest relativ zu einem Rahmen oder Fahrzeuginterieur des Fahrzeugs verbleibt. Weiter umfasst das Bedienelement 2 einen Bedienbereich 7, der relativ zu dem Fixbereich 6 beweglich sein kann. Beispielsweise kann der Bedienbereich 7 entlang einer senkrecht zur Zeichenebene stehenden Bedienachse gedrückt und/oder gezogen sowie um diese Achse herum, also in der Zeichenebene, gedreht oder rotiert werden. An dem Bedienbereich 7 ist hier ein Anzeigebereich 8 vorgesehen. Dieser Anzeigebereich 8 kann also ein Display sein oder umfassen, insbesondere auf oder an einer Kopf- oder Stirnseite des Bedienelements 2 bzw. des Bedienbereichs 7.

Auf der ersten Bedienebene, wenn also die Funktion zum Einstellen der Lautstärke ausgewählt oder aktiv ist, kann der Anzeigebereich 8 logisch oder für eine dargestellte Visualisierung beispielsweise in einen Symbolbereich 9, einen Textbereich 10 und einen Lautstärkebereich 11 aufgeteilt sein. In dem Symbolbereich 9 kann ein vorgegebenes Symbol für eine jeweils aktuelle Fahrprofil- und/oder Ambientemoduseinstellung angezeigt werden. In dem Textbereich 10 kann diese Einstellung durch eine entsprechende worthafte, buchstabenbasierte oder textliche Darstellung angegeben sein. In dem Lautstärkebereich 11 kann eine jeweils aktuelle Lautstärkeeinstellung visualisiert werden. Damit wird zudem visualisiert oder vermittelt, dass aktuell die Funktion zum Einstellen der Lautstärke ausgewählt, also direkt bedienbar ist, beispielsweise durch eine hier schematisch veranschaulichte Drehbetätigung 12 des Bedienbereichs 7.

Das Bedienelement 2 umfasst hier auch ein äußeres Leuchtelement 13 und ein inneres Leuchtelement 14. Diese Leuchtelemente 13, 14 werden automatisch angesteuert, um gemäß einer vorgegebenen Farbzuordnung eine jeweils aktuell ausgewählten Funktion und optional eine jeweils aktuelle oder ausgewählte Optionen oder ein jeweils aktuellen bzw. jeweils aktuell ausgewählten Wert der Funktion zu visualisieren, also anzuzeigen oder zu repräsentieren. Die Leuchtelemente 13, 14 leuchten also in unterschiedlichen Farbtönen, nachdem welche Funktion und optional welche Option oder welcher Wert jeweils aktuell eingestellt oder ausgewählt ist. Zudem kann hier bei ausgewählter Funktion zum Einstellen der Lautstärke der Lautstärkebereich 11 leuchtend hervorgehoben sein, während der Symbolbereich 9 und der Textbereich 10 demgegenüber gedimmt sein können. Zwischen der ersten Bedienebene 4 und der zweiten Bedienebene 5 kann beispielsweise durch eine Drückbetätigung 15 des Bedienelements 2, insbesondere des Bedienbereichs 7, gewechselt werden. Zudem ist hier vorgesehen, dass die Bedienvorrichtung nach ununterbrochenem Ablauf einer vorgegebenen Zeitspanne nach einer Betätigung oder Bedienung auf der zweiten Bedienebene 5 bzw. einer von der ersten Bedienebene 4 verschiedenen Bedienebene automatisch zu der ersten Bedienebene 5, also zur Funktion zum Einstellen der Lautstärke zurückkehrt.

Nach einem Wechsel in die zweite Bedienebene 5 kann durch eine, beispielsweise antippende oder wischende, Berührbetätigung 16 des Bedienelements 2, insbesondere des Bedienbereichs 7, zwischen den Funktionen zur Fahrprofileinstellung - hier links veranschaulicht - und zur Ambientemoduseinstellung - hier rechts veranschaulicht - gewechselt werden.

Ist die Funktion zur Fahrprofileinstellung ausgewählt, so kann dies durch entsprechende Visualisierung in dem Anzeigebereich 8 sowie eine entsprechende Farb- oder Farbtonveränderung des äußeren Leuchtelements 13 und/oder des inneren Leuchtelements 14 visualisiert werden. Dabei kann beispielsweise in dem Symbolbereich 9 ein Fahrprofilsymbol 17, welches ein jeweils aktuell ausgewähltes Fahrprofil 19 repräsentiert, und in dem Textbereich 10 eine vorgegebene zugeordnete Buchstabenkombination, wie beispielsweise "Sport", "Komfort", "Eco" oder dergleichen, angezeigt werden, insbesondere leuchtend hervorgehoben gegenüber der Darstellung oder Visualisierung auf der ersten Bedienebene 4, also bei ausgewählter Funktion zum Einstellen der Lautstärk. Parallel kann korrespondierend dazu mittels des Infotainmentdisplays 3 ein Fahrerlebnisbereich 18 angezeigt werden. In diesem Fahrerlebnisbereich 18 können bei ausgewählter Funktion zum Einstellen des Fahrprofil 19 mehrere oder alle verfügbaren Fahrprofile 19 sowie eine aktuelle Fahrprofileinstellung oder Fahrprofilauswahl 20 angezeigt werden. Dadurch können mehrere oder alle der verfügbaren Fahrprofile 19 direkt zugänglich, also auswählbar oder aktivierbar gemacht werden. Die einzelnen Fahrprofilen 19 können hierbei schrittweise durch eine Drehbetätigung 12 des Bedienelements 2 durchgewechselt oder durch Berühren des entsprechenden Bediensymbols auf dem Infotainmentdisplay 3 ausgewählt bzw. aktiviert werden.

Das Infotainmentdisplay 3 kann für eine Vielzahl weiterer Funktionalitäten verwendet werden. Dies ist hier durch einen Hintergrundbereich 21 veranschaulicht, in dem weitere, insbesondere nicht direkt mit dem Bedienelement 2 verknüpfte Funktionalitäten, Einstellungen, Daten oder Informationen visualisiert werden können.

Wird durch eine Berührbetätigung 16 zu der Funktion zur Ambientemoduseinstellung gewechselt, so kann dies gegebenenfalls durch eine entsprechend angepasste Licht- oder Leuchtfarbe des äußeren Leuchtelements 13 und/oder des inneren Leuchtelements 14 visualisiert bzw. angezeigt werden. Zusätzlich oder alternativ kann dies beispielsweise in dem Anzeigebereich 8 visualisiert werden. Beispielsweise kann dazu in dem Symbolbereich 9 ein Ambientemodussymbol 22 dargestellt werden, das den jeweils aktuell ausgewählten Ambientemodus 23 repräsentiert bzw. anzeigt. Ebenso kann in dem Textbereich 10 eine entsprechende zugeordnete vorgegebene Buchstabenkombination angezeigt werden, welche den jeweils aktuellen oder aktuell ausgewählten Ambientemodus 23 identifiziert, also angibt. Korrespondierend dazu können mit dem Wechsel zu dieser Funktion mittels des Infotainmentdisplays 3 in dem Fahrerlebnisbereich 18 mehrere oder alle verfügbaren Ambientemodi 23 durch entsprechende Bediensymbole analog zu den vorgegebenen Fahrprofilen 19 dargestellt werden. Dabei kann auch ein aktueller oder aktuell ausgewählter Ambientemodus 19, also eine entsprechende Ambientemodusauswahl 24 visualisiert werden, beispielsweise durch ansprechende Hervorhebung oder dergleichen. Zwischen den vorgegebenen Ambientemodi 23 kann hier beispielsweise durch eine Drehbetätigung 12 des Bedienelements 2 bzw. des Bedienbereichs 7 gewechselt werden.

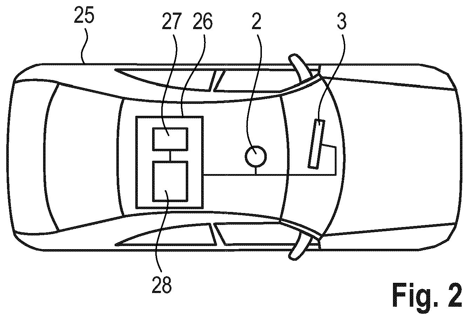

Fig. 2 zeigt zur weiteren Veranschaulichung eine schematische Darstellung eines Kraftfahrzeugs 25. Bei diesem Kraftfahrzeug 25 kann es sich insbesondere um das zuvor genannte Fahrzeug handeln. Das Kraftfahrzeug 25 ist hier also mit der Bedienvorrichtung ausgestattet. Die Bedienvorrichtung kann für die Realisierung der beschriebenen Funktionsentitäten eine Datenverarbeitungseinrichtung 26 umfassen. Diese Datenverarbeitungseinrichtung 26 umfasst hier einen Prozessor 27, also beispielsweise einen Mikrochip, Mikroprozessor, Mikrocontroller oder dergleichen, sowie einen damit verbundenen Datenspeicher 28. Auf dem Datenspeicher 28 kann ein vorgegebenes Betriebs- oder Computerprogramm hinterlegt sein, das zur Realisierung der beschriebenen Funktionalitäten oder Vorgänge durch den Prozessor 27 ausführbar sein kann. Die Datenverarbeitungseinrichtung 26 ist über eine Datenverbindung, beispielsweise eine direkte Verbindung oder ein Bordnetz des Kraftfahrzeugs, 20, mit dem Bedienelement 2 und dem Infotainmentdisplay 3 verbunden. Somit können durch Betätigungen des Bedienelements 2 erzeugte Bediensignale zu der Datenverarbeitungseinrichtung 26 gelangen und von dieser erfasst und verarbeitet werden. Daraufhin können durch die Datenverarbeitungseinrichtung 26 entsprechende Steuersignale zum Ansteuern des Bedienelements 2 und/oder des Infotainmentdisplays 3 erzeugt und ausgesendet werden.

Insgesamt zeigen die beschriebenen Beispiele wie ein System zur Steuerung einer Lautstärke, einer Fahrprofileinstellung und einer Ambiente- oder Atmosphäreneinstellung mit einer gemeinsamen Bedienbarkeit an einem Ort bzw. mittels eines einzigen physischen Bedienelements 2 realisiert werden kann.

### Bezugszeichenliste

- 1: Bedienschema
- 2: Bedienelement
- 3: Infotainmentdisplay
- 4: erste Bedienebene
- 5: zweite Bedienebene
- 6: Fixbereich
- 7: Bedienbereich
- 8: Anzeigebereich
- 9: Symbolbereich
- 10: Textbereich
- 11: Lautstärkebereich
- 12: Drehbetätigung
- 13: äußeres Leuchtelement
- 14: inneres Leuchtelement
- 15: Drückbetätigung
- 16: Berührbetätigung
- 17: Fahrprofilsymbol
- 18: Fahrerlebnisbereich
- 19: Fahrprofil
- 20: Fahrprofilauswahl
- 21: Hintergrundbereich
- 22: Ambientemodussymbol
- 23: Ambientemodus
- 24: Ambientemodusauswahl
- 25: Kraftfahrzeug
- 26: Datenverarbeitungseinrichtung
- 27: Prozessor
- 28: Datenspeicher

## Patentansprüche

1. Multifunktionale Bedienvorrichtung (2, 3, 26) für ein Kraftfahrzeug (25), aufweisend ein multifunktionales Bedienelement (2) zum Bedienen mehrerer unterschiedlicher vorgegebener Funktionen, die ein Einstellen einer Lautstärke für eine akustische Ausgabe mittels einer Lautsprechereinrichtung und ein Einstellen eines Fahrerlebnisses umfassen, wobei mittels des Bedienelements (2) zum Einstellen des Fahrerlebnisses ein Ambientemodus (23) des Kraftfahrzeugs (25) einstellbar ist, **dadurch gekennzeichnet, dass**
- mittels des Bedienelements (2) zum Einstellen des Fahrerlebnisses auch ein Fahrbetriebsmodus (19) des Kraftfahrzeugs (25) einstellbar ist,
- die Bedienvorrichtung (2, 3, 26) ein an dem Bedienelement (2) angeordnetes Leuchtelement (13, 14) aufweist, den unterschiedlichen Funktionen jeweils eine Lichtfarbe des Leuchtelements (13, 14) zugeordnet ist und die Bedienvorrichtung (2, 3, 26) dazu eingerichtet ist, das Leuchtelement in Abhängigkeit von einer jeweils aktuell zur Bedienung ausgewählten Funktion zum Leuchten in der jeweils zugeordneten Lichtfarbe anzusteuern.

2. Bedienvorrichtung (2, 3, 26) nach Anspruch 1,
**dadurch gekennzeichnet, dass**
die Bedienvorrichtung (2, 3, 26) dazu eingerichtet ist, jeweils nach Ablauf einer vorgegebenen Zeitspanne ab der jeweils letzten Bedienung einer von dem Einstellen der Lautstärke unterschiedlichen Funktion in einen Standardbetriebsmodus zurückzukehren, in dem die Lautstärke direkt einstellbar ist, sofern innerhalb der Zeitspanne keine weitere Bedienung des Bedienelements (2) oder einer von dem Einstellen der Lautstärke unterschiedlichen Funktion erfolgt.

3. Bedienvorrichtung (2, 3, 26) nach einem der vorhergehenden Ansprüche,
**dadurch gekennzeichnet, dass**
zum Einstellen des Ambientemodus (23) eine Ambientebeleuchtung einstellbar ist.

4. Bedienvorrichtung (2, 3, 26) nach einem der vorhergehenden Ansprüche,
**dadurch gekennzeichnet, dass**
das Bedienelement (2) auf mehrere unterschiedliche Arten betätigbar ist und die Bedienvorrichtung (2, 3, 26) dazu eingerichtet ist, auf eine Betätigung des Bedienelements (2) in einer ersten Art hin zwischen vorgegebenen Funktionen zu wechseln und auf eine Betätigung des Bedienelements (2) in einer zweiten Art hin zwischen unterschiedlichen vorgegebenen Optionen oder Werten der jeweils aktuell ausgewählten Funktion zu wechseln.

5. Bedienvorrichtung (2, 3, 26) nach einem der vorhergehenden Ansprüche,
**dadurch gekennzeichnet, dass**
die vorgegebenen Funktionen in mehreren Bedienebenen (4, 5), auf denen jeweils wenigstens eine der Funktionen bedienbar ist, organisiert sind, das Bedienelement (2) als Dreh-Drücksteller ausgestaltet ist und die Bedienvorrichtung (2, 3, 26) dazu eingerichtet ist, auf eine Drückbetätigung (15) des Bedienelements (2) entlang einer vorgegebenen Achse hin zwischen den Bedienebenen (4, 5) zu wechseln, auf eine Wischbetätigung (16), insbesondere senkrecht zu der vorgegebenen Achse, und/oder ein Berühren (16) eines berührungsempfindlichen Bereichs (8) des Bedienelements (2) hin soweit vorhanden zwischen mehreren Funktionen derselben jeweils aktuell ausgewählten Bedienebene (4, 5) zu wechseln und auf eine Drehbetätigung (12) des Bedienelements (2) um die vorgegebene Achse hin durch vorgegebene Optionen oder Werte (19, 23) der jeweils aktuell ausgewählten Funktion zu wechseln.

6. Bedienvorrichtung (2, 3, 26) nach einem der vorhergehenden Ansprüche,
**dadurch gekennzeichnet, dass**
die Bedienvorrichtung (2, 3, 26) ein von dem Bedienelement (2) räumlich beabstandetes Infotainmentdisplay (3) umfasst oder in bestimmungsgemäßer Einbaulage in dem Kraftfahrzeug (25) mit einem Infotainmentdisplay (3) des Kraftfahrzeugs (25) verbunden ist und dazu eingerichtet ist, korrespondierend zu jeder Betätigung des Bedienelements (2) ein Steuersignal zu erzeugen und an das Infotainmentdisplay (3) zu senden, um dieses zum Visualisieren einer durch die jeweilige Betätigung des Bedienelements (2) bewirkten Auswahl oder Einstellung anzusteuern.

7. Bedienvorrichtung (2, 3, 26) nach Anspruch 6,
**dadurch gekennzeichnet, dass**
das Infotainmentdisplay (3) als Touchscreen ausgestaltet ist und die Bedienvorrichtung (2, 3, 26) dazu eingerichtet ist, auf eine Betätigung des Bedienelements (2) hin das Infotainmentdisplay (3) zum gleichzeitigen Anzeigen von Bediensymbolen für sofern vorhanden mehr als drei, insbesondere alle, vordefinierten Funktionen auf einer durch die Betätigung ausgewählten Bedienebene (4, 5) und/oder zum Anzeigen von Bediensymbolen (19, 23) für sofern vorhanden mehr als drei, insbesondere alle, vordefinierten Optionen (19, 23) oder Werte der jeweils aktuell ausgewählten Funktion anzusteuern.

8. Bedienvorrichtung (2, 3, 26) nach einem der vorhergehenden Ansprüche,
**dadurch gekennzeichnet, dass**
das Bedienelement (2) einen Anzeigebereich (8) aufweist und die Bedienvorrichtung (2, 3, 26) dazu eingerichtet ist, den Anzeigebereich (8) zum Visualisieren einer jeweils aktuell ausgewählten Funktion und/oder einer jeweils aktuellen Auswahl einer Option (20, 24) oder eines Wertes der aktuell ausgewählten Funktion anzusteuern.

9. Bedienvorrichtung (2, 3, 26) nach Anspruch 8,
**dadurch gekennzeichnet, dass**
die Bedienvorrichtung (2, 3, 26) dazu eingerichtet ist, mittels des Anzeigebereichs (8) die jeweilige Funktion und/oder die jeweils aktuelle Auswahl der Option (20, 24) oder des Wertes der Funktion gleichzeitig symbolhaft (17, 22) und worthaft (10) zu visualisieren.

10. Kraftfahrzeug (25), aufweisend eine Bedienvorrichtung (2, 3, 26) nach Anspruch 9.

## Claims

1. Multifunctional operator control apparatus (2, 3, 26) for a motor vehicle (25), which operator control apparatus comprises a multifunctional operating element (2) for operating a plurality of different specified functions which include adjusting a volume for an acoustic output by means of a speaker device and adjusting a driving experience, wherein an ambient mode (23) of the motor vehicle (25) can be adjusted by means of the operating element (2) for adjusting the driving experience,
**characterized in that**
- a driving mode (19) of the motor vehicle (25) can also be adjusted by means of the operating element (2) for adjusting the driving experience,
- the operator control apparatus (2, 3, 26) has a lighting element (13, 14) arranged on the operating element (2), each of the different functions is assigned a light color of the lighting element (13, 14) and the operator control apparatus (2, 3, 26) is designed to control the lighting element to light up in the relevant assigned light color depending on a function currently selected for operation.

2. Operator control apparatus (2, 3, 26) according to claim 1,
**characterized in that**
the operator control apparatus (2, 3, 26) is designed to return to a standard operating mode, in which the volume can be adjusted directly, after a specified period of time has elapsed since the last operation of a function other than adjusting the volume, provided that no further operation of the operating element (2) or of a function other than adjusting the volume takes place within the period of time.

3. Operator control apparatus (2, 3, 26) according to either of the preceding claims,
**characterized in that**
ambient lighting can be adjusted to adjust the ambient mode (23).

4. Operator control apparatus (2, 3, 26) according to any of the preceding claims,
**characterized in that**
the operating element (2) can be actuated in a plurality of different ways and the operator control apparatus (2, 3, 26) is designed to switch between specified functions upon actuation of the operating element (2) in a first way and to switch between different specified options or values of the currently selected function upon actuation of the operating element (2) in a second way.

5. Operator control apparatus (2, 3, 26) according to any of the preceding claims,
**characterized in that**
the specified functions are organized in a plurality of operating levels (4, 5), on each of which at least one of the functions can be operated, the operating element (2) is designed as a rotary-and-push knob and the operator control apparatus (2, 3, 26) is designed to switch between the operating levels (4, 5) upon a push actuation (15) of the operating element (2) along a specified axis, to switch between a plurality of functions of the same currently selected operating level (4, 5) upon a swipe actuation (16), in particular perpendicular to the specified axis, and/or upon a touch (16) of a touch-sensitive region (8) of the operating element (2), if available, and to switch through specified options or values (19, 23) of the currently selected function upon a rotary actuation (12) of the operating element (2) about the specified axis.

6. Operator control apparatus (2, 3, 26) according to any of the preceding claims,
**characterized in that**
the operator control apparatus (2, 3, 26) comprises an infotainment display (3) spatially at a distance from the operating element (2) or is connected to an infotainment display (3) of the motor vehicle (25) in the intended installation position thereof in the motor vehicle (25) and is designed to generate a control signal corresponding to each actuation of the operating element (2) and to send said control signal to the infotainment display (3) in order to control the infotainment display to visualize a selection or adjustment effected by the relevant actuation of the operating element (2).

7. Operator control apparatus (2, 3, 26) according to claim 6,
**characterized in that**
the infotainment display (3) is designed as a touchscreen and the operator control apparatus (2, 3, 26) is designed to control the infotainment display (3) upon actuation of the operating element (2) to simultaneously display operating symbols for, if available, more than three, in particular all, predefined functions on an operating level (4, 5) selected by the actuation and/or to display operating symbols (19, 23) for, if available, more than three, in particular all, predefined options (19, 23) or values of the currently selected function.

8. Operator control apparatus (2, 3, 26) according to any of the preceding claims,
**characterized in that**
the operating element (2) has a display region (8) and the operator control apparatus (2, 3, 26) is designed to control the display region (8) to visualize a currently selected function and/or a current selection of an option (20, 24) or a value of the currently selected function.

9. Operator control apparatus (2, 3, 26) according to claim 8,
**characterized in that**
the operator control apparatus (2, 3, 26) is designed to visualize, simultaneously in symbols (17, 22) and in words (10), the relevant function and/or the current selection of the option (20, 24) or of the value of the function, by means of the display region (8).

10. Motor vehicle (25) having an operator control apparatus (2, 3, 26) according to claim 9.

## Revendications

1. Dispositif de manipulation (2, 3, 26) multifonctionnel pour un véhicule automobile (25), présentant un élément de manipulation (2) multifonctionnel pour la manipulation de plusieurs fonctions prédéfinies différentes, lesquelles comprennent un réglage d'un volume sonore pour une sortie acoustique au moyen d'un appareil formant haut-parleur et un réglage d'une expérience de conduite, dans lequel un mode d'ambiance (23) du véhicule automobile (25) peut être réglé au moyen de l'élément de manipulation (2) pour le réglage de l'expérience de conduite, **caractérisé en ce que**
- un mode de fonctionnement de conduite (19) du véhicule automobile (25) peut également être réglé au moyen de l'élément de manipulation (2) pour le réglage de l'expérience de conduite,
- le dispositif de manipulation (2, 3, 26) présente un élément lumineux (13, 14) disposé sur l'élément de manipulation (2), respectivement une couleur de lumière de l'élément lumineux (13, 14) est associée aux différentes fonctions et le dispositif de manipulation (2, 3, 26) est configuré pour commander l'élément lumineux en fonction d'une fonction respectivement actuellement sélectionnée pour la manipulation afin qu'il s'allume dans la couleur de lumière respectivement associée.

2. Dispositif de manipulation (2, 3, 26) selon la revendication 1,
**caractérisé en ce que**
le dispositif de manipulation (2, 3, 26) est configuré pour revenir, respectivement après l'écoulement d'un laps de temps prédéterminé à partir de respectivement la dernière manipulation d'une fonction différente du réglage du volume sonore, dans un mode de fonctionnement standard dans lequel le volume sonore est directement réglable, dans la mesure où aucune autre manipulation de l'élément de manipulation (2) ou d'une fonction différente du réglage du volume sonore n'est effectuée pendant le laps de temps.

3. Dispositif de manipulation (2, 3, 26) selon l'une des revendications précédentes,
**caractérisé en ce que**
pour le réglage du mode d'ambiance (23), un éclairage d'ambiance peut être réglé.

4. Dispositif de manipulation (2, 3, 26) selon l'une des revendications précédentes,
**caractérisé en ce que**
l'élément de manipulation (2) peut être actionné de plusieurs manières différentes et le dispositif de manipulation (2, 3, 26) est configuré pour, en réponse à un actionnement de l'élément de manipulation (2) d'une première manière, passer d'une fonction prédéfinie à une autre et, en réponse à un actionnement de l'élément de manipulation (2) d'une seconde manière, passer de différentes options ou valeurs prédéfinies de la fonction respectivement actuellement sélectionnée.

5. Dispositif de manipulation (2, 3, 26) selon l'une des revendications précédentes,
**caractérisé en ce que**
les fonctions prédéfinies sont organisées en plusieurs niveaux de manipulation (4, 5), sur lesquels respectivement au moins une des fonctions peut être manipulée, l'élément de manipulation (2) est réalisé sous forme d'actionneur de pression rotatif et le dispositif de manipulation (2, 3, 26) est configuré pour passer d'un niveau de manipulation (4, 5) à un autre par un actionnement de pression (15) de l'élément de manipulation (2) le long d'un axe prédéfini, par un actionnement de balayage (16), en particulier perpendiculairement à l'axe prédéfini, et/ou un toucher (16) d'une zone (8) sensible au toucher de l'élément de manipulation (2), le cas échéant, d'une fonction à une autre entre plusieurs fonctions du même niveau de manipulation (4, 5) respectivement actuellement sélectionné et passer, par un actionnement rotatif (12) de l'élément de manipulation (2) autour de l'axe prédéfini, à des options ou des valeurs (19, 23) prédéfinies de la fonction respectivement actuellement sélectionnée.

6. Dispositif de manipulation (2, 3, 26) selon l'une des revendications précédentes,
**caractérisé en ce que**
le dispositif de manipulation (2, 3, 26) comprend un écran d'infodivertissement (3) disposé à distance de l'élément de manipulation (2) ou est connecté, dans une position de montage conforme à l'utilisation dans le véhicule automobile (25), à un écran d'infodivertissement (3) du véhicule automobile (25) et est configuré pour générer un signal de commande correspondant à chaque actionnement de l'élément de manipulation (2) et l'envoyer à l'écran d'infodivertissement (3) afin de commander celui-ci pour visualiser une sélection ou un réglage provoqué par l'actionnement respectif de l'élément de manipulation (2).

7. Dispositif de manipulation (2, 3, 26) selon la revendication 6,
**caractérisé en ce que**
l'écran d'infodivertissement (3) est réalisé sous forme d'écran tactile et le dispositif de manipulation (2, 3, 26) est configuré pour, en réponse à un actionnement de l'élément de manipulation (2), commander l'écran d'infodivertissement (3) pour afficher simultanément des symboles de manipulation pour, le cas échéant, plus de trois fonctions prédéfinies, en particulier toutes, sur un niveau de manipulation (4, 5) sélectionné par l'actionnement et/ou pour afficher des symboles de manipulation (19, 23) pour, le cas échéant, plus de trois options (19, 23) ou valeurs prédéfinies, en particulier toutes, de la fonction respectivement actuellement sélectionnée.

8. Dispositif de manipulation (2, 3, 26) selon l'une des revendications précédentes,
**caractérisé en ce que**
l'élément de manipulation (2) présente une zone d'affichage (8) et le dispositif de manipulation (2, 3, 26) est configuré pour commander la zone d'affichage (8) pour la visualisation d'une fonction respectivement actuellement sélectionnée et/ou d'une sélection respectivement actuelle d'une option (20, 24) ou d'une valeur de la fonction actuellement sélectionnée.

9. Dispositif de manipulation (2, 3, 26) selon la revendication 8,
**caractérisé en ce que**
le dispositif de manipulation (2, 3, 26) est configuré pour visualiser, au moyen de la zone d'affichage (8), la fonction respective et/ou la sélection respectivement actuelle de l'option (20, 24) ou de la valeur de la fonction simultanément sous forme de symbole (17, 22) et de mot (10).

10. Véhicule automobile (25), présentant un dispositif de manipulation (2, 3, 26) selon la revendication 9.
